# EUROPÄISCHE PATENTSCHRIFT

(11) **EP 0 970 917 B1**
(45) Veröffentlichungstag und Bekanntmachung des Hinweises auf die Patenterteilung: **14.09.2005**
(21) Anmeldenummer: 99112859.6
(22) Anmeldetag: 03.07.1999
(51) Int. Cl.: C01B 15/10, C01B 15/00

(54) **Verfahren zur Herstellung von beschichteten Persauerstoffverbindungen**
Method for coating peroxide compounds
Procédé pour la fabrication de COMPOSES PEROXYGENE enrobés

(30) Priorität: 10.07.1998 DE 19830946
(43) Veröffentlichungstag der Anmeldung: 12.01.2000
(73) Patentinhaber: Degussa AG, 40474 Düsseldorf (DE)
(72) Erfinder: Bertsch-Frank, Birgit, Dr., 63584 Gründau (DE); Bewersdorf, Martin, Dr., 63571 Gelnhausen (DE); Kaiser, Lothar, 63150 Heusenstamm (DE); Kohlen, Rainer, Dr., 61273 Wehrheim (DE); Overdick, Ralph, 65719 Hofheim (DE); Scheibe, Michael, Dr., 63457 Hanau (DE)

(56) Entgegenhaltungen:
- WO-A-95/02555
- WO-A-97/19890
- DE-A- 2 417 572
- DE-C- 3 839 723
- US-A- 5 681 807

## Beschreibung

Die Erfindung richtet sich auf ein Verfahren gemäß Anspruch 1 zur Herstellung von beschichteten Persauerstoffverbindungen, insbesondere beschichtetem Natriumpercarbonat mit erhöhter Aktivsauerstoffstabilität.

Viele Persauerstoffverbindungen, auch als Aktivsauerstoffverbindungen bezeichnet, wie Natriumpercarbonat (2 Na₂CO₃ · 3 H₂O₂) und Natriumperborat-monohydrat und -tetrahydrat, finden als Aktivsauerstoffkomponente in Wasch-, Bleich- und Reinigungsmitteln Verwendung. Aufgrund der ungenügenden Lagerstabilität des Natriumpercarbonats in warm-feuchter Umgebung sowie in Gegenwart verschiedener Wasch- und Reinigungsmittelkomponenten muß Natriumpercarbonat gegen den Verlust an Aktivsauerstoff (Oa) stabilisiert werden. Ein wesentliches Prinzip zur Stabilisierung besteht darin, die Natriumpercarbonatteilchen mit einer Hülle aus stabilisierend wirkenden Komponenten zu umgeben.

Zur Stabilisierung von Natriumpercarbonat wurden unterschiedliche Substanzen und Substanzkombinationen vorgeschlagen, welche in einer oder in mehreren Schichten auf einen Kern aus Natriumpercarbonat aufgebracht werden. Beispielhafte Hüllkomponenten sind: Hydratbildende anorganische Verbindungen, wie Natriumsulfat, Magnesiumsulfat, Alkalimetallcarbonate und -bicarbonate, ferner Alkalimetallsilikate, Alkali- und Erdalkaliborate und Alkali- und Magnesiumsalze von organischen Carbonsäuren, wie Fettsäuren und Zitronensäure. Die Beschichtung von Natriumpercarbonat und anderen Persauerstoffverbindungen erfolgt heute überwiegend in Wirbelschichtprozessen, wobei eine Lösung der Hüllkomponenten auf in einer Wirbelschicht befindliche Keime aufgebracht und Wasser verdampft wird. Beispielhaft wird auf die DE-OS 24 17 572, DE-PS 26 22 610, WO 95/02555 sowie WO 97/19890 verwiesen.

Bei der bekannten Wirbelschicht-Coatung von Natriumpercarbonat werden 0,5 bis 25 Gew.-% Hüllkomponenten aufgebracht. Mit steigender Hüllmenge steigt zwar die Stabilität an, jedoch nimmt auch der Aktivsauerstoffgehalt ab. Demgemäß besteht ein Interesse daran, den Anteil der Hüllkomponenten in umhülltem Natriumpercarbonat unter Aufrechterhaltung einer guten Stabilität in Waschmitteln zu minimieren. Während sich die Wirbelschicht-Coatung gegenüber anderen Umhüllungsverfahren, etwa ein Umhüllen in einem Mischer mit nachfolgender Trocknung, als überlegen erwies, wurde von den Erfindern der vorliegenden Anmeldung mittels Färbeversuchen nachgewiesen, daß die Umhüllung unter Verwendung eines Wirbelschichtreaktors mit einem üblichen Anströmboden, etwa einem Loch- oder Siebboden oder sogenannten Conidurboden®, sowohl bei diskontinuierlicher und erst recht bei kontinuierlicher Fahrweise unvollständig ist. Dieser Mangel, der sich in einer unzureichenden Stabilität der Aktivsauerstoffverbindung manifestiert, kann nur durch Aufbringen einer dickeren Hüllschicht überwunden werden, allerdings unter Inkaufnahme eines geringen Aktivsauerstoffgehalts.

Aufgabe der vorliegenden Erfindung war demgemäß, ein Verfahren zum Beschichten von Aktivsauerstoffverbindungen, insbesondere Natriumpercarbonat, in einer Wirbelschicht bereitzustellen, womit bei gegebener Hüllmenge eine höhere Lagerstabilität als mit den vorbekannten Vorrichtungen erhalten werden sollte.

Die Aufgabe wird durch das erfindungsgemäße Verfahren gemäß Anspruch 1 gelöst.

Gefunden wurde ein Verfahren zur Herstellung von beschichteten Persauerstoffverbindungen, insbesondere beschichtetem Natriumpercarbonat mit erhöhter Aktivsauerstoffstabilität, durch Wirbelschicht-Coatung, umfassend Aufsprühen einer eine oder mehrere Beschichtungskomponenten enthaltenden wäßrigen Lösung auf Teilchen der Persauerstoffverbindung in einer Wirbelschichtkammer und Trocknen mittels eines durch den Anströmboden der Kammer strömenden Fluidisierungsgases bei einer Wirbelschichttemperatur im Bereich von 30 bis 70 °C, das dadurch gekennzeichnet ist, daß man einen radialen Anströmboden verwendet, dessen Durchtrittsöffnungen das Fluidisierungsgas im Bereich der Öffnung in einem Winkel von weniger als 35°, gemessen zur Horizontalen, in Form gerichteter Teilströme austreten lassen, und in welchem Sprühdüsen angeordnet sind, deren Impuls in dieselbe Richtung weist wie der Impuls des Fluidisierungsgases. Die Unteransprüche richten sich auf bevorzugte Ausführungsformen des Verfahrens.

Gemäß einer besonders bevorzugten Ausführungsform wird die Beschichtung diskontinuierlich in einem runden Reaktor mit rundem Anströmboden aus turbinenschaufelartig übereinandergreifenden Lamellen und im Anströmboden in Rotationsrichtung der Wirbelschicht ausgerichteten Düsen durchgeführt. In diesem Reaktor wird durch den kräftigen Drall der Teilströmungen das Gut gründlich durchmischt und ein wiederholter Durchgang der Partikel durch den Sprühkegel der Düsen erzwungen.

Unter Verwendung einer Wirbelschichtapparatur mit den anspruchsgemäßen Merkmalen konnte in überraschender Weise bei gegebener Hüllmenge eine überraschend höhere Lagerstabilität erzielt werden. Unter Einsatz von Natriumsulfat als einzigem Beschichtungsmittel ist es damit bei einer Hüllmenge zwischen 3 und 7 Gew.-% Natriumsulfat möglich, das Stabilitätsniveau von Natriumperborat-monohydrat zu erreichen. Je kleiner der mittlere Korndurchmesser des zu beschichtenden Materials ist, desto größer wird die Hüllmenge gewählt und umgekehrt.

Die Figur zeigt ein Verfahrensschema einer Anlage zur erfindungsgemäßen Beschichtung. Der Wirbelschichtreaktor 1 umfaßt eine Wirbelschichtkammer 2, einen Zuluftkasten 3, ein als Beruhigungsraum dienendes Oberteil 4, einen Anströmboden 7 aus übereinandergreifenden Lamellen, ein zentrales bis unter den Verteilerboden reichendes Zuluftrohr 5, Sprühdüsen 8 mit einer dem Impuls des Fluidisierungsgases entsprechenden Ausrichtung, eine Austragsvorrichtung 6 für das gecoatete Produkt und Zufuhrvorrichtung 9 zum Beschicken des Reaktors mit ungecoatetem Produkt. Das Fluidisierungsgas kann anstelle mittels des Zentralrohrs auch unmittelbar dem Zuluftkasten zugeführt werden. In der Figur wurden die Lamellen des runden Anströmbodens sowie Düsen zu Demonstrationszwecken anders dargestellt als dies dem Schnitt durch den Reaktor entspricht - demonstriert wird das Überlappen der Lamellen und die bevorzugte Ausrichtung der Düsen. Die Luft L_{W} zur Ausbildung der Wirbelschicht und Trocknung wird mittels eines Gebläses 14 angesaugt, in einem Filter 15 gereinigt, in einem Heizregister auf Temperatur gebracht und durch das Zuluftrohr 5 unter den Anströmboden geleitet. Das aus dem Reaktor austretende Gas wird im Filter 17 entstaubt und mittels eines Abgasgebläses 18 als feuchtes Abgas L_{F} der Umgebung zugeführt. Selbstverständlich läßt sich das Verfahren auch nur mit einem Abgasgebläse (Sauggebläse) betreiben. Zu beschichtendes Produkt P wird über Leitung 19 und die Zufuhrvorrichtung 9 dem Reaktor zugeführt. Eine das Coatungsmittel C enthaltende Lösung wird aus dem Behälter 19 mittels der von einem gemeinsamen Motor 10 angetriebenen Pumpen 11 über die Leitungen 12 den Düsen 8 zugeführt. Den 3-Wege-Zweistoff-Düsen wird über Leitung 13 gleichzeitig Zerstäubungsluft und Luft L_{M} zur Einstellung eines Mikroklimas zugeführt. Das Zentralrohr der Düse wird mit der Coatungslösung, der darum angeordete Ringspalt mit Zerstäubungsluft und der äußerste Ringspalt mit MikroklimaLuft beaufschlagt. In der Figur wurden aus Übersichtlichkeitsgründen nicht alle Luftleitungen und nicht alle Düsen mit zugeordneten Pumpen gezeichnet. Beschichtetes (= gecoatetes) Produkt PC wird über die Entnahmevorrichtung 6 aus dem Reaktor entnommen.

Erfindungswesentliches Merkmal ist die Ausgestaltung des Anströmbodens und dazugehörige Anordnung der Düsen. Die Durchtrittsöffnungen für das Wirbelschichtgas sollen so ausgestaltet sein, daß eine möglichst starke horizontale Komponente in der Luftströmung resultiert. Die Teilströme sollen vorzugsweise jetartig aus den gerichteten Bodenöffnungen bzw. Spalten austreten. Zweckmäßigerweise werden die Öffnungen in Form von Spalten ausgeführt, welche aus übereinandergreifenden flach gestellten Lamellen gebildet werden. Eine besonders bevorzugte Ausführungsform des Anströmbodens ist aus der DE-PS 38 39 723 bekannt - hier ist der untere Teil des Reaktors kugelförmig ausgebildet. Im Betriebszustand ist der Winkel der Lamellen zur Horizontalen 5° bis 35°, besonders 5° bis 25°. Die Lamellen sind rotationssymmetrisch angeordnet und lassen sich zur Entleerung des Reaktors senkrecht stellen. Alternativ läßt sich der Reaktor auch durch einen über dem Anströmboden angeordneten Seitenabzug entleeren.

Gemäß einer bevorzugten Ausführungsform handelt es sich bei den Düsen um 3-Wege-Zweistoff-Düsen, wie sie aus der DE-PS 38 06 537 bekannt sind. Zusätzlich zum Kanal für die zu versprühende Coatungslösung und die Zerstäubungsluft enthält diese Düse einen darum angeordneten Ringkanal zur Zuspeisung von Luft vorgegebener Temperatur und Feuchtigkeit zwecks Erzeugung eines Mikroklimas in/um den Sprühkegel, womit ein zu rasches Verdampfen und insbesondere Ankrustungen an den Düsen vermieden werden. Zum Versprühen der Coatungslösung können übliche Zweistoffdüsen verwendet werden, jedoch muß der Impuls der Düse in die Richtung des Impulses des Wirbelschichtgases weisen. Der Impulsvektor der versprühten Lösung muß dabei nicht identisch mit dem Impulsvektor des Gases sein, sondern nur in die gleiche Richtung weisen. Vorzugsweise ist die Achse der Düse etwa parallel zur Neigung der Lamellen. Besonders vorteilhaft ist es, die Düsen zwischen den Lamellen annähernd radial zur Behälterachse in Strömungsrichtung des Gases so anzuordnen, daß die Düsenspitze außerhalb der sich überlappenden Lamellen befindet.

Das Verfahren eignet sich zur Herstellung von beschichteten Persauerstoffverbindungen, insbesondere zur Beschichtung von Natriumpercarbonat (2 Na₂CO₃ · 3 H₂O₂). Während Natriumperborat-monohydrat heute in unbeschichteter Form in Wasch-, Bleich- und Reinigungsmitteln Einsatz findet, erscheint eine Beschichtung von Natriumpercarbonat vielfach unumgänglich, um eine akzeptable Lagerstabilität zu erzielen. Das erfindungsgemäße Verfahren macht es überraschenderweise möglich, mit wenig Beschichtungsmaterial - etwa 3 bis 7 Gew.-%, abhängig vom Teilchenspektrum - eine Lagerstabililtät zu erreichen, welche an diejenige von ungecoatetem Natriumperborat-monohydrat als Bezugssubstanz heranreicht oder übersteigt. Im Vergleich zu in Wirbelschichtreaktoren mit einem Sieb-, Loch- oder Conidurboden beschichtetem Natriumpercarbonat führt, wie anhand gefärbter Coatinglösungen bewiesen werden konnte, das erfindungsgemäße Verfahren zu einem wesentlich gleichmäßiger beschichteten und damit stabileren Produkt. Selbstverständlich kann auch die Lagerstabilität von Natriumperborat-monohydrat durch Beschichten mit einer stabilisierenden Verbindung oder Kombination von Verbindungen, etwa aus der Reihe der eingangs erwähnten Stoffe, erhöht werden.

Die Erfindung wird anhand der Beispiele weiter erläutert.

### Beispiele 1 bis 6

In einer runden Labor-Wirbelschichtapparatur (HKC 5 der Firma Hüttlin, Steinen) mit einem Kranz von flach gestellten überlappenden Leitplatten (= Lamellen) und in der Strömungsrichtung radial angeordneten drei Sprühdüsen wurde durch Aufbaugranulation hergestelltes Natriumpercarbonat mit Natriumsulfat beschichtet.

Eingesetzt wurde in den Beispielen 1 bis 5 Natriumpercarbonat mit dₚ 50 = 0,60 mm (= NaPc 1), in Beispiel 6 ein Natriumpercarbonat mit dp 50 = 0,45 mm (= NaPc 2). NaPc 1 und NaPc 2 hatten folgende Siebanalyse (% auf Sieb in mm):

| | | | | | | | | | | | | |
|---|---|---|---|---|---|---|---|---|---|---|---|---|
| Sieb (mm) | 1,4 | 1,25 | 1,0 | 0,8 | 0,7 | 0,6 | 0,5 | 0,4 | 0,3 | 0,2 | 0,1 | Rest |
| NaPc1 | 5 | 2 | 6 | 11 | 6 | 19 | 17 | 19 | 11 | 4 | 0 | 0 |
| NaPc2 | 1 | 2 | 4 | 7 | 4 | 11 | 11 | 20 | 22 | 15 | 2 | 0 |

Beschichtet wurde mit einer 20 gew.-%igen wäßrigen Na₂SO₄-Lösung. Wie sich anhand von Analysen der beschichteten Produkte und des Filterstaubs ergab, befanden sich ca. 2/3 des Coatingmittels in der Beschichtung, und ca. 1/3 wurde im Filter wiedergefunden. Offensichtlich wird durch Abrieb während des Beschichtens und Trocknens ein Teil der Hüllschicht abgetragen.

Der Reaktor wurde mit 5 kg Natriumpercarbonat beschickt, und mittels Luft wurde fluidisiert. Während des Sprühens wurde eine Wirbelschichttemperatur im Bereich von 30 bis 65 °C aufrechterhalten. Nach Beendigung des Sprühens wurde bei einer Wirbelschichttemperatur um 70 °C nachgetrocknet.

Die Betriebsbedingungen und Analysen einschließlich Klimatest folgen aus der Tabelle 1. Zu Vergleichszwecken wurden im Klimatest stets auch handelsübliches Natriumperborat-monohydrat und unbeschichtetes Natriumpercarbonat mitgetestet.

Durchführung des Klimatests: Zur Bestimmung der Lagerstabilität werden erfindungsgemäß hergestelltes umhülltes Natriumpercarbonat sowie zu Vergleichszwecken nicht-umhülltes Ausgangsprodukt und handelsübliches Natriumperborat-monohydrat jeweils bei gleichem Aktivsauerstoffgehalt in Waschmittelabmischungen gelagert und zeitabhängig der Aktivsauerstoffgehalt bestimmt und zum Ausgangswert in Bezug gesetzt (= Oa-Erhalt (%)):

Ein phosphatfreies aber zeolithhaltiges Waschmittelpulver, Aktivator TAED und die zu testende Persauerstoffverbindung werden in einer solchen Menge gemischt, daß das Gemisch 5 % TAED enthält und der Oa-Gehalt etwa 2,35 Gew.-% beträgt. Bestandteile im Waschmittelpulver in Gew.-%:

| | |
|---|---|
| Anionische Tenside | 12 |
| Nichtionische Tenside | 8 |
| Zeolith A | 36 |
| Soda | 10 |
| Na-silikate | 3 |
| Rest incl. Feuchte | 31. |

800 g des jeweiligen Gemischs werden in handelsüblichem, wasserabweisend imprägnierten und verklebten E1-Waschmittelpaketen bei 30 °C und 80 % relativer Feuchte im Klimaschrank gelagert. Pro Entnahmetermin - nach 4 und 8 Wochen - wird ein Paket gelagert. Der Oa-Gehalt wird in üblicher Weise permanganometrisch bestimmt; aus dem Ausgangs-Oa-Gehalt und dem Oa-Gehalt nach 4 und 8 Wochen wird der jeweilige Oa-Erhalt in % ermittelt.

**Tabelle 1**

| Beispiel Nr. | Wirbelschichttemperatur (°C) | Coating (Na₂SO₄) | | Gehalt(%) Na₂SO₄ im umhüllten Na-percarbonat | Klimatest (%) Oa-Erhalt nach | |
|---|---|---|---|---|---|---|
| | | Menge ¹⁾ (%) | Dauer (min | | 4 Wo. | 8 Wo. |
| Pbmh ²⁾ | | | | | 88 | 86 |
| NaPc 1 | | | | | 67 | 45 |
| 1 | 60 | 5 | 26 | 3,3 | 97 | 86 |
| 2 | 44 | 5 | 26 | 3,6 | 93 | 91 |
| 3 | 65/46 ³⁾ | 5 | 27 | 3,3 | 97 | 87 |
| 4 | 45 | 7 | 38 | 4,8 | 98 | 90 |
| 5 | 60 | 3 | 28 | 1,6 | 94 | 85 |
| 6 | 49 | | 25 | 5,1 | 95 | 87 |

| | | | | | | |
|---|---|---|---|---|---|---|
| 1) Menge Na₂SO₄, bezogen auf eingesetztes Natriumpercarbonat (NaPc), eingesetzt als Sprühlösung; die vierte Spalte gibt den analytisch bestimmten Ist-Gehalt an. | | | | | | |
| 2) Pmbh = Natriumperborat-monohydrat | | | | | | |
| 3) Start bei 65 °C, nach 10 Min. auf 46 °C abgesenkt | | | | | | |

Der prozeßbedingte Abrieb (Staub) enthielt die Differenzmenge zwischen eingesetztem und im umhüllten Produkt wiedergefundenen Natriumsulfat. Die Ergebnisse zeigen, daß mit niedriger Beschichtungsmenge eine sehr gute Lagerstabilität erzielt wird, die an jene von Natriumperborat-monohydrat heranreicht oder diese sogar übersteigt.

### Beispiele 7 bis 10

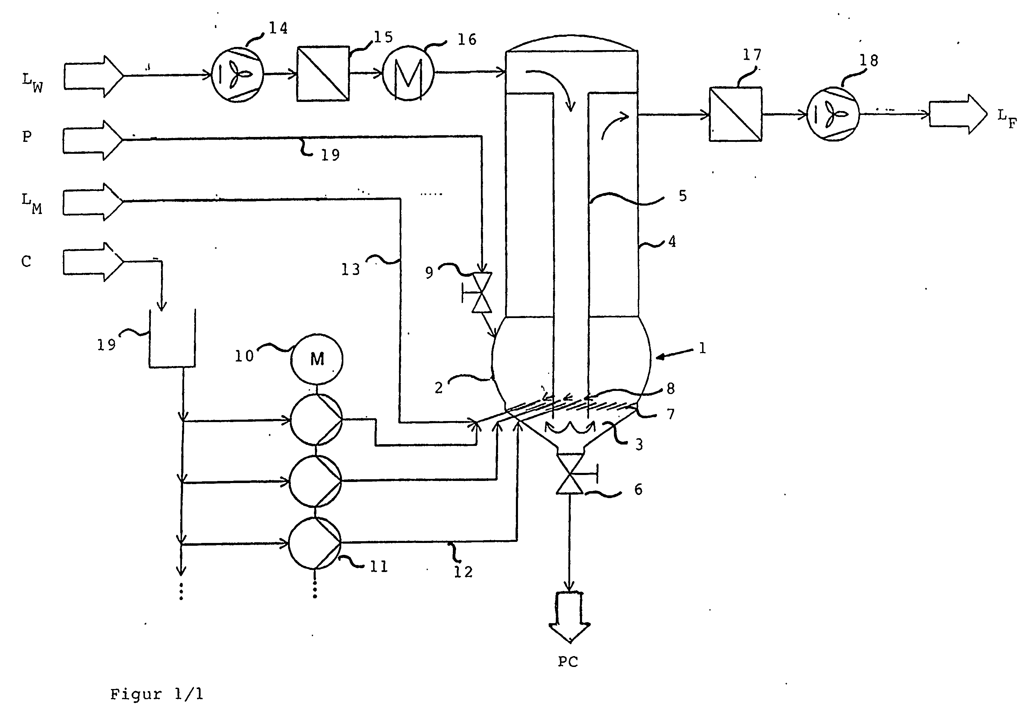

Beschichtet wurde ein Natriumpercarbonat-Wirbelschichtsprühgranulat mit einer mittleren Körnung von d₅₀ = 0,41 mm (= NaPc3) mit Natriumsulfat unter Einsatz einer 20 gew.-%igen Na₂SO₄-Lösung. Die Beschichtung erfolgte in einer Anlage gemäß Figur 1/1 mit einem Technikumsreaktor (Reaktor HKC 800 der Firma Hüttlin). Im Anströmboden aus turbinenartig angeordneten Lamellen waren 18 Düsen angeordnet, die mittels 18 auf einer gemeinsam, von einem E-Motor angetriebenen Achse montierten Pumpenköpfen (Schlauchpumpen) mit der Na₂SO₄-Lösung sowie mit Zerstäubungsluft und Mikroklimaluft versorgt werden. Im Reaktor wurde mittels des Zu- und Abluftgebläses ein Unterdruck von 1000 Pa eingestellt.

Die Siebanalyse der eingesetzten Natriumpercarbonate NaPc 1 und NaPc 2 lautete:

| | | | | | | | | | | | |
|---|---|---|---|---|---|---|---|---|---|---|---|
| Sieb (mm) | 1,25 | 1 | 0,8 | 0,7 | 0,6 | 0,5 | 0,4 | 0,3 | 0,2 | 0,1 | Rest |
| NaPc 3 | | 1 | 3 | 2 | 8 | 12 | 25 | 28 | 16 | 3 | 1 |

Die folgende Tabelle zeigt wesentliche Betriebsparameter und die Na₂SO₄-Analysen und Klimatests. Es zeigte sich, daß erfindungsgemäß beschichtetes Natriumpercarbonat mit einer geringen effektiven Beschichtungsmenge - etwa 3 bis 5 Gew.-% - die Lagerstabilität von Natriumperborat-monohydrat etwa erreicht oder übersteigt.

**Tabelle 2**

| Beispiel Nr. | Hold up (kg) | Wirbelschichttemperatur (°C) | Coating | | Ist-Gehalt Na₂SO₄ im Produkt | Klimatest (%) Oa-Erhalt nach | |
|---|---|---|---|---|---|---|---|
| | | | Menge ³⁾ (%) | Dauer (min) | | 4 Wo. | 8 Wo. |
| Zum Vergleich: Pbmh ¹⁾ | | | | | | 88 | 86 |
| NaPc 3 ²⁾ | | | | | | 56 | 32 |
| 7 | 250 | 45 | 5 | 37 | 2,2 | 90 | 83 |
| 8 | 300 | 40 | 5 | 32 | 3,1 | 89 | 82 |
| 9 | 400 | 43 | 5 | 43 | | 88 | 83 |
| 10 | 300 | 40 | 7,0 | 45 | 4,9 | 91 | 90 |

| | | | | | | | |
|---|---|---|---|---|---|---|---|
| 1) Natriumperborat-monohydrat unbeschichtet | | | | | | | |
| 2) unbeschichtetes Natriumpercarbonat = Ausgangsprodukt für B7 bis B10 | | | | | | | |
| 3) Entsprechend der Sprühmenge, bezogen auf eingesetztes Natriumpercarbonat | | | | | | | |

### Vergleichsbeispiel

Ein handelsüblicher Laborwirbelschichttrockner (Typ T2 der Firma Aeromatic) mit einem Siebboden als Anströmboden (Durchmesser 20 cm, Maschenweite 0,71 mm), Temperaturfühler 10 cm und eine Düse 25 cm über dem Siebboden und einer Sprührichtung im Gegenstrom zum Fluidisierungsgas wurde mit 4750 g Natriumpercarbonat beschickt. Das Natriumpercarbonat wies das gleiche Kornspektrum auf wie das in den erfindungsgemäßen Beispielen 1 bis 3 eingesetzte Produkt. Die Düsenluft wurde geöffnet, es wurde ein Vordruck von 4 bar eingestellt.

Das Natriumpercarbonat wurde mittels Fluidisierungsluft gewirbelt (250 - 300 m³/h), die Höhe der Wirbelschicht (expandiert) betrug ca. 20 cm. Die Solltemperatur für die Wirbelschicht wurde auf 60 °C eingestellt. Die Lufteingangstemperatur wurde auf 95 °C eingestellt. Bei Erreichen einer Wirbelschichttemperatur von 60 °C wurden 250 g Natriumsulfat (als 20 gew.%ige Lösung) mittels einer Düse (Dreistoffdüse Fa. Schlick Nr. 946) eingedüst. Die Einspeisegeschwindigkeit der Schlauchpumpe wurde so gewählt, daß eine Wirbelschichttemperatur im Bereich von 50 bis 60 °C aufrechterhalten wurde. Nach Beendigung der Einspeisung wurde das beschichtete Natriumpercarbonat noch für 30 Min. bei 70 °C Wirbelbettemperatur getrocknet. Während der gesamten Versuchsdauer wurde die Filterabreinigung alle 3 Min. für je 10 Sekunden betrieben.

Das so stabilisierte Produkt enthielt laut Analyse 4,2 Gew.-% Na₂SO₄ und zeigte im Klimatest in der Waschmittelabmischung 88 % nach 4 Wochen bzw. 79 % nach 8 Wochen Aktivsauerstofferhalt. Parallel wurde, wie üblich, Natriumperborat-monohydrat dem gleichen Klimatest unterworfen: Oa-Erhalt nach 4 Wochen 90 %, nach 8 Wochen 88 %.

## Patentansprüche

1. Verfahren zur Herstellung von beschichteten Persauerstoffverbindungen, insbesondere beschichtetem Natriumpercarbonat mit erhöhter Aktivsauerstoffstabilität, durch Wirbelschicht-Coatung, umfassend Aufsprühen einer eine oder mehrere Beschichtungskomponenten enthaltenden wäßrigen Lösung auf Teilchen der Persauerstoffverbindung in einer Wirbelschichtkammer eines runden Reaktors und Trocknen mittels eines durch Durchtrittsöffnungen eines Anströmbodens in die Kammer strömenden Fluidisierungsgases bei einer Wirbelschichttemperatur im Bereich von 30 bis 70 °C,
**dadurch gekennzeichnet,**
**daß** man einen Reaktor mit rundem Anströmboden verwendet, in welchem die Durchtrittsöffnungen des Anströmbodens das Fluidisierungsgas im Bereich der Öffnung in einem Winkel von weniger als 35°, gemessen zur Horizontalen, in Form gerichteter Teilströme austreten lassen und Sprühdüsen im Anströmboden angeordnet sind, wobei deren Ausrichtung dem Impuls des Fluidisierungsgases und der Rotationsrichtung der Wirbelschicht entspricht.

2. Verfahren nach Anspruch 1,
**dadurch gekennzeichnet,**
**daß** man zur batchweisen Durchführung einen Reaktor mit rundem Anströmboden aus turbinenschaufelartig übereinandergreifenden Lamellen verwendet.

3. Verfahren nach Anspruch 1 oder 2,
**dadurch gekennzeichnet,**
**daß** man zum Versprühen der Beschichtungslösung Düsen mit einer zentralen Öffnung für die Flüssigkeit, einem darum angeordneten Ringspalt für das Zerstäubungsgas und einem äußeren Ringspalt für ein Mikroklima-Gas verwendet.

4. Verfahren nach einem der Ansprüche 1 bis 3, wobei Natriumpercarbonat beschichtet wird,
**dadurch gekennzeichnet,**
**daß** man die Beschichtungslösung solange aufsprüht, bis die auf dem Natriumpercarbonatkern befindliche Beschichtungsmenge 2 bis 7 Gew.-%, insbesondere 3 bis 5 Gew.-%, beträgt.

## Claims

1. Process for the preparation of coated peroxygen compounds, in particular coated sodium percarbonate, with an increased active oxygen stability by fluidized bed coating, comprising spraying of an aqueous solution comprising one or more coating components onto particles of the peroxygen compound in a fluidized bed chamber of a circular reactor and drying by means of a fluidizing gas flowing into the chamber through passage openings of an inflow base at a fluidized bed temperature in the range from 30 to 70ºC,
**characterized in that**
a reactor with a circular inflow base is used, in which reactor the passage openings of the inflow base allow the fluidized gas to emerge in the region of the opening at an angle of less than 35º, measured with respect to the horizontal, in the form of directed part streams and reactor spray nozzles are arranged in the inflow base, the alignment thereof corresponding to the momentum of the fluidizing gas and the direction of rotation of the fluidized bed.

2. Process according to claim 1,
**characterized in that**
for the batchwise procedure, a reactor with a circular inflow base of lamellae overlapping like turbine blades is used.

3. Process according to claim 1 or 2,
**characterized in that**
for spraying the coating solution, nozzles with a central opening for the liquid, an annular gap for the spraying gas arranged around this and an outer annular gap for a microclimate gas are used.

4. Process according to one of claims 1 to 3, wherein sodium percarbonate is coated,
**characterized in that**
the coating solution is sprayed until the amount of coating on the sodium percarbonate core is 2 to 7 wt.%, in particular 3 to 5 wt.%.

## Revendications

1. Procédé pour la préparation de composés de peroxygène enrobés, en particulier de percarbonate de sodium enrobé, avec une stabilité accrue de l'oxygène actif, par enrobage dans un lit fluidisé, comportant une pulvérisation d'une solution aqueuse contenant un ou plusieurs composants d'enrobage sur des particules du composé de peroxygène dans une chambre à lit fluidisé d'un réacteur rond, et un séchage au moyen d'un gaz de fluidisation s'écoulant dans la chambre à travers les ouvertures de passage d'un plateau à écoulement, à une température du lit fluidisé dans la plage de 30 à 70°C,
**caractérisé en ce qu'**
on utilise un réacteur à plateau à écoulement rond, dans lequel les ouvertures de passage du plateau à écoulement laissent passer le gaz de fluidisation dans la zone de l'ouverture, sous un angle inférieur à 35°, mesuré par rapport à l'horizontale, sous forme d'écoulements partiels dirigés, et des buses de pulvérisation sont disposées dans le plateau à écoulement, avec leur orientation qui correspond à la quantité de mouvement du gaz de fluidisation et à la direction de rotation du lit fluidisé.

2. Procédé selon la revendication 1,
**caractérisé en ce que**
pour la réalisation par lots, on utilise un réacteur à plateau à écoulement rond formé de lamelles se chevauchant comme des ailettes de turbine.

3. Procédé selon la revendication 1 ou 2,
**caractérisé en ce que**
pour la pulvérisation de la solution d'enrobage, on utilise des buses avec une ouverture centrale pour le liquide, une fente circulaire disposée autour pour le gaz de pulvérisation et une fente circulaire extérieure pour un gaz de microclimat.

4. Procédé selon l'une des revendications 1 à 3, selon lequel on enrobe du percarbonate de sodium,
**caractérisé en ce qu'**
on pulvérise la solution d'enrobage jusqu'à ce que la quantité d'enrobage se trouvant sur le noyau de percarbonate de sodium soit de 2 à 7 % en poids, en particulier de 3 à 5 % en poids.
